Europäisches Patentamt

European Patent Office

Office européen des brevets

(19)

(11) Publication number : **0 455 600 A1**

(12) # EUROPEAN PATENT APPLICATION

(21) Application number : 91810318.5

(22) Date of filing : 26.04.91

(51) Int. Cl.⁵ : **A23L 1/236, A23L 1/308, A23G 3/00, A23G 3/30**

(30) Priority : 03.05.90 US 518373

(43) Date of publication of application :
06.11.91 Bulletin 91/45

(84) Designated Contracting States :
BE CH DE DK ES FR GB GR IT LI NL SE

(71) Applicant : WARNER-LAMBERT COMPANY
201 Tabor Road
Morris Plains New Jersey 07950 (US)

(72) Inventor : Luo, Shiuh Jonson
51 Woodcrest Drive
Livingston, New Jersey 07039 (US)
Inventor : Bunick, Frank J.
47 Long Ridge Road
Randolph, New Jersey 07869 (US)
Inventor : Hussein, Mamoun Mahmoud
115 Boulevard
Mountain Lakes, New Jersey 07046 (US)
Inventor : The other inventors have agreed to
waive their entitlement to designation.

(74) Representative : Silbiger, Jakob, Dr.
c/o CAPSUGEL AG Fabrikmattenweg 2-4
CH-4144 Arlesheim (CH)

(54) Polydextrose flavor improvement.

(57) A method for removing unpleasant organoleptic sensations from polydextrose-containing confections is disclosed. Polydextrose solutions ranging from 50 to 70% are pH-adjusted from their typical pH of between 2.5 to 3.5 to levels of between about 4 to about 7, preferably of between about 4.5 to 6.5, and most preferably from about 5 to about 6. The polydextrose solutions are thereafter heated to form confectionery syrups and hard candy is thereafter made in the customary way. Confections prepared in accordance with this method are low calorie and of superior taste and mouth feel compared to non-pH-adjusted polydextrose confections. In the cases where it is necessary to re-acidify hard candy syrups for particular confectionery formulas, it has been found that the choice of acidulants, preferably malic and adipic acids, provide superior confections.

EP 0 455 600 A1

The present invention relates to the art of providing low-calorie bulking agents for food products, and, in particular, provides a reduced-calorie bulking agent which is organoleptically pleasing when used in sweetened compositions, such as confections.

In recent years, the public has become increasingly attentive to reducing caloric intake. In most occasions, however, reduction of caloric intake often requires organoleptic compromises. Reduced calorie foods tend to be at best rather bland and oftentimes unpalatable to many dieters.

The beverage industry has met demands resulting from the above-described popular trends by providing diet soft drinks which rely upon high intensity non-nutritive sweeteners to replace the sugar content. Such diet beverages have been greatly accepted by the public and now constitute a significant portion of many dieter's reduced caloric intake. Solid food manufacturers, on the other hand, have not been as successful in providing reduced-calorie alternatives. In addition to providing sweetness, sugar often provides bulk to the foodstuff which must be replaced with a reduced-calorie bulking agent if the sugar is to be removed.

To this end, various low-calorie bulking agents have been developed over the years in an effort to provide organoleptically acceptable taste. One such example of a low-calorie bulking agent is polydextrose. Polydextrose is a polymer of glucose approved for use in comestibles having only one quarter the caloric content of sucrose, (Polydextrose: 1 cal./gm, Sucrose: 4 cal./gm). Thus, in those foods where it is desired to reduce caloric value and/or sweetness, polydextrose provides a useful non-sweet bulking alternative to sugar. Polydextrose may be used alone or in combination with various artificial sweeteners and caloric intake can often be reduced by 50% or more.

Polydextrose is an essentially non-nutritive carbohydrate substitute which can be prepared through polymerization of glucose in the presence of food-acceptable polycarboxylic acid catalysts and polyols. See, for example, U.S. Patent No. 3,766,165 and U.S. Patent No. 3,874,794. Generally, polydextrose is known to be commercially available in three forms, Polydextrose A, and Polydextrose K are powdered solids, while Polydextrose N is supplied as a 70% solution, each of which also include low molecular weight components, such as glucose, sorbitol and oligomers.

The ability to include polydextrose as a non-nutritive bulking agent in foods and comestibles has suffered from several shortcomings. Polydextrose is hampered by its unacceptable bitterness and "musty" off-flavor. The bitterness is thought to be attributed to endogenous levoglucosan (1,6-anhydroglucose), although other compounds are suspected. Small amounts of furfural derivatives may be responsible for the "musty" off-flavors.

In the past, considerable effort has been directed to improving the organoleptic properties of polydextrose. For example, various attempts at treating polydextrose before including the non-nutritive agent in foodstuffs have been suggested. U.S. Patent No. 4,622,233 to Torres, discloses treating type A polydextrose with a bleaching agent and thereafter purifying the polydextrose. When polydextrose is subjected to cooking temperatures, the coloring returns to the substance. The need for decolorization, however, appears unnecessary. Furthermore, the extra steps are burdensome in terms of additional time, handling and energy.

Alternatively, commonly assigned U.S. Patent Application Serial No. 043793 entitled, "Method Of Purifying Polydextrose And Composition Containing Same", by Bunick and Luo, co-inventors herein, discloses a process for purifying polydextrose to provide an organoleptically acceptable polydextrose ingredient. An aqueous solution of polydextrose, in a concentration of from about 10% to about 90% is contacted with a polar organic solvent. The mixture is then allowed to equilibrate and form a contaminant-containing fraction and a polydextrose-containing fraction. The fractions are thereafter separated and a highly purified polydextrose is obtained.

It is, therefore, an object of the present invention to provide an improved method of incorporating polydextrose in food products by removing the inherent bitterness and musty off-taste of the polydextrose.

Another object of the present invention is to provide a method of removing the organoleptically unpleasant sensations of foodstuffs containing polydextrose without involving purification processes.

In accordance with the present invention, there is provided a method for improving polydextrose flavor to provide an organoleptically acceptable sugar and bulking agent substitute. The method includes intimately contacting an aqueous solution of purified or unpurified polydextrose in a concentration of from about 50 to about 90% by weight with a pH-adjusting substance and buffering agent before heating to form a confectionery syrup. Thereafter, the syrup of polydextrose may be cooled and processed into confectionery candies.

In particular the present invention refers to a method of removing unpleasant organoleptic sensations from polydextrose-containing confections, comprising:

a) adjusting the pH of an aqueous solution of polydextrose used to prepare said confection to a range of between about 4 and about 7; and

(b) maintaining said pH during preparation of said confection whereby a pleasant polydextrose-containing confections with reduced bitterness and reduced off-taste is formed.

In a preferred embodiment, the pH is adjusted by dibasic sodium phosphate and sodium hydroxide present.

The buffer is preferably phosphate-based and present in an amount of about 0.5%.

Typically, polydextrose A has a pH of about 2.5 to 3.5. In the method of the present invention, the pH is increased to about 4 to about 7, preferably to about 4.5 to about 6.5 and most preferably to about 5 to about 6.

After the aqueous solution of polydextrose and the pH- adjusting and buffering agents have been homogeneously mixed, such as by high-speed mixing, the mixture is heated to about 125°C for a time period of about 10 to 30 minutes until a syrup is formed. After this point, confectionery candy making is continued on in a normal fashion. The confectionery syrup is allowed to cool and harden and cut into portions.

While pH-adjusted polydextrose solution prepared in accordance with the present invention can be used in any edible food product which is suitable for its inclusion, it has been found to be especially effective in the art of confectionery candies. In the instance where a low calorie hard candy-type confection is desired, the improved polydextrose product is used along with a high-intensity sweetener to replace sugar as the bulking and sweetening agent. The process of the present invention, therefore, provides an alternative low calorie bulking agent which can conveniently be used in gums, confectionery pressed tablets, hard candy confections, and soft candy confections, such as chocolates and nougats.

When used in the above-described manner, the polydextrose is combined with a high-intensity sweetener such as a acesulfame-K, aspartame, saccharin or other high-intensity sweeteners.

In the instance where a low calorie hard candy-type confection is desired, acidulants may be added to the cooling syrup to re-acidify the candy to its customary tartness. Acidulants are preferably chosen from adipic and malic acids alone or in combination, with concentrations ranging from about 0.1% to about 5%, preferably from about 0.5% to about 2%, and most preferably from about 1% to about 1.5%.

In the instances were soft confections are sought, acidulants are normally not required. Other ingredients which can be used in the present composition include flavorings, colorings, and other tablet excipients which are known in the art for use in candy compositions.

Also provided is a method of enhancing sensory perception of other foodstuffs containing polydextrose. The polydextrose is pH-adjusted to maintain a pH of from about 4 to about 7 before heating an alkali such as disodium phosphate and/or sodium hydroxide. The polydextrose is found to be organoleptically acceptable, with bitterness and musty off-flavor undetected.

Unlike prior art approaches to polydextrose modification and flavor enhancement, the method of pH-adjustment in this invention is achieved without requiring excessive expenditures of time, labor and cost. Furthermore, the present process can be accomplished very simply and without purification process steps. Further, the present invention's use of pH-control agents has not been found to produce undesirable saltiness in the final confection compositions.

As a result of the present invention, food products containing high levels of the low-calorie bulking agent polydextrose can be made to be organoleptically acceptable. The removal of the bitterness and musty off-flavor inherent in the polydextrose is conveniently removed by adjusting the pH and buffering the polydextrose solution prior to heating. Products made in accordance with the method of the present invention are not only organoleptically pleasing, but also of very low caloric value.

For a better understanding of the present invention, together with other and further objects, reference is made to the following description and its scope will be pointed out in the appended claims.

Fig. 1 is a graph presenting the results of comparative sensory evaluation, illustrating the effect of pH on polydextrose.

Fig. 2 is a graph presenting the results of sensory evaluation of confections containing the inventive pH-adjusted polydextrose, after the polydextrose-containing candies have been acidulated to a pH of 3 using various acidulants.

It has been surprisingly found that the organoleptic disadvantages associated with confections containing the low calorie bulking agent polydextrose can be overcome by using the process of the present invention. The bitterness and musty off-taste heretofore thought to be inherent in polydextrose-containing confections is overcome by pH-adjustment of the polydextrose prior to heating confectionery based solutions.

The method of the present invention is appealing since it is a simple operation requiring relatively little expenditure of time, labor and money. A general procedure in accordance with the present invention includes dissolving polydextrose A in water to form a solution of from about 50 to about 90%. The pH of the polydextrose solution prior to any adjustment is typically from about 2.5 to about 3.5. The aqueous solution of polydextrose is then pH-adjusted with an alkali to increase the pH to from about 4 to about 7, preferably from about 4.5 to about 6.5, and most preferably from about 5 to about 6. Examples of suitable alkali for adjusting the polydextrose solution include sodium hydroxide, potassium hydroxide, calcium carbonate, calcium hydroxide, sodium carbonate, sodium bicarbonate, dibasic sodium phosphate, and mixtures of the above. Typically, the pH- adjusting alkali is added in an amount of from about 0.2% to about 1.2%, preferably from about 0.4% to about 0.7%, and most preferably about 0.5%.

In addition, a buffer may be added to the pH-adjusted polydextrose solution to maintain the pH within the desired range. Examples of such buffers include phosphates in an amount of from about 0.1% to about 1.5% and preferably about 0.5% concentration as well as 1.0%. The polydextrose solution is thereafter heated to about 125°C for about from 10 to 30 minutes until a syrup-like consistency is formed. Other suitable buffers include citrate, acetate, malate, adipates, succinates and mixtures thereof.

Upon cooling, an acidulant may be added to the polydextrose syrup to re-acidify the confection. A non-limiting list of possible acidulants is adipic, malic, acetic, succinic, citric, tartaric, phosphoric acids, their anhydrides, and combinations thereof. The aforementioned acidulants are typically present in an amount of from about 0.1% to about 5% by weight. The preferred concentration range of acidulants is from about 0.5% to 2%, and most preferably, the acidulant is present in an amount of from about 1% to about 1.5%.

The pH-adjusted polydextrose is particularly well suited for confectionery formulations. The preparation of confectionery formulations is historically well known and has changed relatively little through the years. Confectionery items have been classified as either "hard" confectionery or "soft" confectionery.

In accordance with the present invention, the pH-adjusted polydextrose may be processed as a hard confectionery by conventional means. Such conventional means of hard confectionery processing includes the use of fire cookers, vacuum cookers, and scraped-cookers, also referred to high-speed atmospheric cookers.

Fire cookers involved a traditional method of making a candy base. In this method, the desired quantity of the pH-adjusted polydextrose is heated in a kettle until a final temperature of 115 to 125°C is achieved, typically within ten to thirty minutes. The batch is then cooled and worked as a plastic-like mass to incorporate additives such as acidulants, and, if needed, flavors, colorants, and the like.

A high-speed atmospheric cooker uses a heat-exchanger surface which involves spreading a film of candy on a heat-exchange surface. The candy is heated to 165 to 170°C in a few minutes. The candy is thereafter rapidly cooled to 100 to 120°C and worked as a plastic-like mass enabling incorporation of additives, such as acidulants, flavors, sweeteners, colorants and the like.

In vacuum cookers, the pH-adjusted polydextrose bulking agent is boiled to a temperature of from about 125°C to about 130°C. Vacuum is applied and additional water is boiled off without further heating. When cooking is complete, the mass is a semi-solid and has a plastic-like consistency. At this point, acidulants, flavorings, colorants and other additives, if needed, are incorporated in the mass by routine mechanical mixing operations.

In each of the above-described "hard" confectionery processes, optimum mixing time required to uniformly mix the above-described additives (acidulants, colorants, flavors, and the like) is determined by the time needed to obtain a uniform distribution of the materials. Normally, mixing times of between 4 to 10 minutes have been found to be acceptable.

Once the confectionery candy mass has been properly tempered, it may be cut into workable portions or formed into desired shapes. A variety of forming techniques may be utilized depending upon the shape and size of the final product desired. A general discussion of the composition and preparation of hard confections may be found in H.A. Lieberman, Pharmaceutical Dosage Forms; Tablets, Vol. 1 (1980), Marcel Dekker, Inc., New York, N.Y., at pages 339 to 469, the disclosure of which is incorporated by reference herein.

The apparatus useful in accordance with the method of the present invention includes cooking and mixing apparatus well known in the confectionery manufacturing arts, and selection of the specific apparatus will be apparent to the skilled artisans.

Similar to hard confectionery, soft confectionery may be utilized in this invention. The preparation of soft confections, such as nougat, involves conventional methods, such as the combination of two primary components, namely a high boiling syrup such as corn syrup, a sugar alcohol syrup, or the like, and a relatively light textured frappe, generally prepared from egg albumin, gelatin, vegetable proteins, such as soy dried compounds, sugarless milk derived compounds such as milk proteins and mixtures thereof. The frappe is generally relatively light, and may, for example, range in density from about 0.5 to about 0.7 grams/cc.

The high boiling syrup or "bob" syrup of the soft confectionery is relatively viscous and has a higher density than the frappe component and frequently contains a substantial amount of a bulking agent. The pH-adjusted polydextrose, prepared in accordance with the present invention, is particularly well suited for inclusions and soft confections as the bulking agent found in the "bob syrup". Conventionally, the final nougat composition is prepared by the addition of the "bob syrup" to the frappe under agitation, to form the basic nougat mixture. Further ingredients such as flavorings, additional bulking agents such as hydrogenated starch hydrolysate, colorants, preservatives, medicaments, mixtures thereof and the like may also be added under agitation. A general discussion of the composition and preparation of nougat confections may be found in B.W. Minifie, Chocolate, Cocoa, and Confectionery: Science and Technology, 2nd Edition, AVI Publishing Co., Inc., Westport, Conn. (1980), at pages 424-425, the disclosure of which is incorporated by reference herein.

The procedure for preparing soft confectionery involves known procedures. In general, the frappe component is prepared first and thereafter the syrup component, in this case the pH-adjusted polydextrose syrup, is slowly added under agitation at a temperature of at least about 65°C, and preferably at least about 100°C. The mixing of components is continued until a uniform mixture is formed. The mixture is thereafter cooled to a temperature below 80°C, at which point, a flavor may be added. The ingredients are thereafter mixed for an additional period until the confection is ready to be removed and formed into suitable confectionery shapes.

The flavoring components of confections prepared in accordance with the present invention may be chosen from synthetic flavoring liquids such as synthetic flavor oils and flavoring aromatics and/or oils; and/or liquids, oleoresin or extracts derived from plants, leaves, flowers, fruits, etc., and combinations thereof. Preferably, the flavor component is selected from spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful are artificial, natural or synthetic flavors such as vanilla and citrus oils including lemon, orange, grape, lime and grapefruit and fruit essences including apple, pear, peach, grape, strawberry, raspberry, cherry, plum, pineapple, apricot, etc.

Other useful flavorings include aldehydes and esters such as benzaldehyde (cherry, almond), citral, i.e., alpha-citral (lemon, lime), neral, i.e., beta-citral (lemon, lime), decanal (orange, lemon), aldehyde C-8 (citrus fruits), aldehyde C-9 (citrus fruits), aldehyde C-12 (citrus fruits), tolyl aldehyde (cherry, almond), 2,6-dimethyl-octanal (green fruit), and 2-dodecenal (citrus, mandarin), mixtures thereof and the like.

In the instance where sweeteners are utilized, the present invention contemplates the inclusion of those sweeteners well known in the art, including both natural and artificial sweeteners. The sweeteners may be chosen from the following non-limiting list: sugars such as sucrose, glucose (corn syrup), dextrose, invert sugar, fructose, and mixtures thereof, saccharin and its various salts such as the sodium or calcium salt; cyclamic acid and its various salts such as the sodium salt; the dipeptide sweeteners such as aspartame, Thalin$^R$ available from Tate and Lyle, Alitame$^R$ available from Pfizer, Monellin$^R$ available from Monell Chemical Senses, dihydrochalcone compounds, glycyrrhizin; Stevia Rebaudiana (Stevioside); chloro derivatives of sucrose; dihydroflavinol; hydroxyguaiacol esters; L-amino dicarboxylic acid gem-diamines; L-aminodicarboxylic acid aminoalkenoic acid ester amides; and sugar alcohols such as sorbitol, sorbitol syrup, mannitol, xylitol, and the like. Also contemplated as an additional sweetener is the non-fermentable sugar substitute (hydrogenated starch hydrolysate) which is described in U.S. Reissue Patent No. 26,959. Also contemplated is the synthetic sweetener 3,6-dihydro-6-methyl1-1-1,2,3-oxathiazin-4-one-2,2-dioxide, particularly the potassium (acesulfame-K), sodium and calcium salts thereof as described in German Patent No. 2,001,017.7. In general, the amount of sweetener will vary with the desired amount of sweetness desired for the particular confection, and whether it be of the hard or soft confection variety. Typically, however, the amount of sweetener ranges from about 0.01% to about 1.0% by weight of the final composition.

In addition, the confection may also contain suitable auxiliary flavorings including both natural and artificial flavors, and mints such as peppermint, artificial vanilla, cinnamon, various fruit flavors, both individual and mixed. Such flavorings are generally utilized in amounts that will vary depending upon the particular confection.

The confection may also include a colorant. The colorants may be selected from any of the numerous dyes suitable for food, drug and cosmetic applications, and known as FD&C dyes and the like. The materials acceptable for the foregoing spectrum of use are preferably water-soluble. Illustrative examples include indigoid dye, known as FD&C Blue No. 2, which is the disodium salt of 5,5'-indigotindisulfonic acid. Similarly, the dye known as FD&C Green No. 1 comprises a triphenylmethane dye and is the monosodium salts of 4-[4-N-ethyl-p-sulfobenzylamino) diphenylmethylane]-[1-(N-ethyl-N-p-sulfoniumbenzyl)2-5-cyclohexadieneimine]. A full recitation of all FD&C and D&C dyes and their corresponding chemical structures may be found in the Kirk-Othmer Encyclopedia of Chemical Technology, in Volume 5, pages 857-884, which is incorporated herein by reference.

The variations that one may practice with regard to the above-mentioned confections are wide ranging and within the ability of those skilled in the art particularly with regard to the use of additional composition fillers, flavoring adjuncts, the use of coloring agents, etc.

Tests were conducted by using confections prepared in accordance with the present invention to compare them with confection products not containing pH-adjusted polydextrose. It was found that the inherent bitterness and musty off-taste which often detract from the overall flavor quality of products made with polydextrose have been largely removed. It has been found that careful selection of pH level as well as the type of acidulant, where called for, can have a marked improvement in the confection's taste.

## EXAMPLES

The following examples serve to provide further appreciation of the invention but are not meant in any way to restrict the effective scope of the invention.

5

## EXAMPLE 1

Samples of pH-adjusted polydextrose containing confections were prepared according to the method of the present convention. A 22.2% polydextrose solution was prepared by dissolving the polydextrose A in a sufficient amount of water. The polydextrose solution was thereafter divided into eight samples, Samples A, B, C, D and E were pH-adjusted with concentrated sodium hydroxide, while Samples F, G and H were pH-adjusted with a 0.5% dibasic sodium phosphate and sodium hydroxide solution. Samples A-E contained a final citrate buffer concentration of 0.33% w/w, while the Samples F, G, and H contained a 0.5% w/w phosphate buffer. The adjusted pH's of the seven samples are set forth in Table 1.

### TABLE I

| | | | PH SAMPLE | | | | |
|---|---|---|---|---|---|---|---|
| **A** | **B** | **C** | **D** | **E** | **F** | **G** | **H** |
| 3.3 | 3.9 | 4.4 | 4.8 | 5.1 | 5.1 | 5.7 | 6.3 |

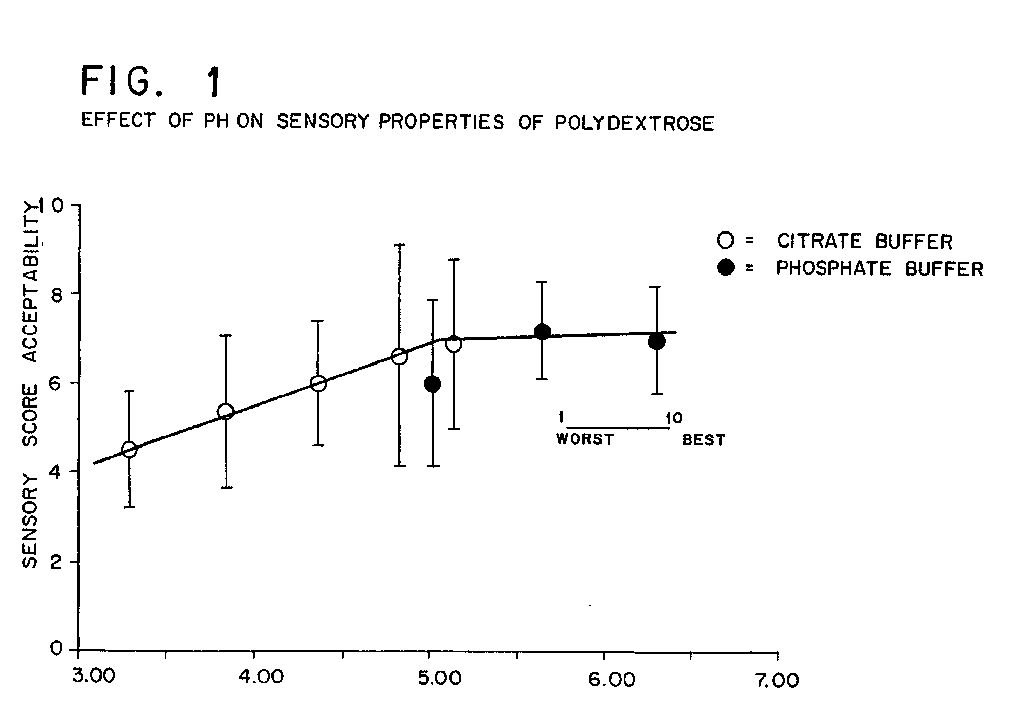

Each of the solutions were cooked to 125° for a time period of about thirty minutes and thereafter poured onto a cooling table to solidify. The candy was thereafter cooled and cut into pieces and subjected to sensory evaluation. The panel was composed of fifteen subjects and acceptability of the candy was rated on a scale of 1 to 10, 1 representing the lowest acceptability and 10, the highest. The results of the sensory evaluation are set forth in Fig. 1.

Referring to Fig. 1, the results of the evaluation demonstrate a direct relationship between the pH of the polydextrose and the sensory perception. Both the citrate buffered and the phosphate buffered polydextrose solutions showed significant improvements in acceptability of the confections as the pH exceeded 5.0. The results further demonstrate the heretofore unrealized benefits of increasing the pH of polydextrose solutions prior to heating and forming hard candy-type confections.

## EXAMPLE 2

In this Example, a 50% polydextrose solution was prepared in a manner similar to that of Example 1. The polydextrose solution was pH-adjusted to 5.0 with a sodium hydroxide solution. The pH-adjusted polydextrose solution was thereafter heated to 125°C until a syrupy consistency was obtained. The resultant product was allowed to cool to 80°C. At this point, the pH-adjusted polydextrose solution was divided into six portions, each of which contained a different acidulant. The acidulants were added to the polydextrose syrup to re-acidify the confection to a pH of 3, as is customary in the hard candy-type confection so as to impart a desired level of tartness. The acidulants and the quantity of each are set forth in Table 2 below.

### TABLE 2

| | **I** | **J** | **K** | **L** | **M** | **N** |
|---|---|---|---|---|---|---|
| Acidulant: | Citric | Malic | Succinic | Phosphoric | Acetic | Hydrochloric |

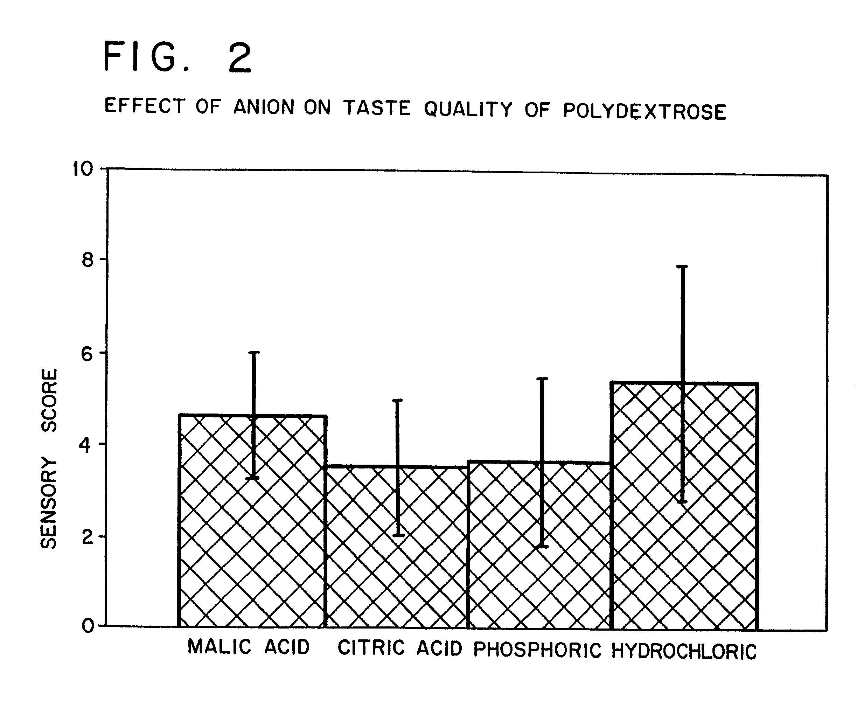

Each of the above hard candy confections were thereafter poured onto a cooling table and worked to evenly distribute the acidulant. The product was then formed into pieces of hard candy. A panel of eight experienced tasters evaluated each of the above confections assigning a value of between 1, for the lowest acceptability, to 10, for the highest acceptability of each of the confections. The results of the sensory evaluation are set forth in Fig. 2.

Referring to Fig. 2, the results of the evaluation demonstrate the variability of the acidulant on the confection's taste. Acetic and succinic acids had such objectionable tastes that they were not illustrated in the Figure. Hydrochloric acid and malic acid gave the highest scores compared to citric and phosphoric acid. Hydrochloric acid, however, would not be appropriate for use in confectionery products.

The results reported in Fig. 2 further demonstrate the need for careful selection of acidulants when re-acidification of the confectionery syrup containing pH-adjusted polydextrose is sought. Although citric acid is a common food acidulant, its performance as demonstrated in Fig. 2 pales to that of malic acid in pH-adjusted polydextrose confections. Malic acid provides a higher degree of tartness than citric acid at equal usage levels in polydextrose while at the same time lowering polydextrose bitterness. While including citric acid in hard candy confections results in an acceptable product, the selection of malic acid provides a superior one.

## EXAMPLE 3

In this Example, six samples of a pH-adjusted polydextrose solution were prepared in a manner similar to that of Examples 1 and 2. A 100 gram sample of polydextrose was dissolved in 400 ml of water. Each of the samples was thereafter adjusted with sodium hydroxide to a pH of 6. As discussed in the previous Examples, the pH-adjusted polydextrose solution was heated to 125°C for a time period sufficient to effect a syrupy consistency, e.g., about 30 minutes. The resultant products were allowed to cool to approximately 80°C whereupon one gram of an acidulant was added to the respective pH-adjusted polydextrose syrup samples. The acidulants selected for each of the Samples is set forth in Table 3, below.

## TABLE 3

| Sample: | O | P | Q | R | S | T |
|---|---|---|---|---|---|---|
| Acidulant: | Phosphoric | Fumaric | Lactic | Citric | Adipic | Malic |

The resultant products were then placed on cooling tables and worked to evenly the distribute the ingredients. The products were then formed into pieces of hard candy. A sensory panel often people participated in evaluating the criteria of flavor, tartness and bitterness perception of the various samples. It was found that each of the acidulants provided organoleptically pleasing confections.

The method of the present invention provides a means to include polydextrose as a low calorie bulking agent in confectionery candies with a minimum amount of resource expenditure. The adjustment of pH of the polydextrose allows the artisan to provide a reduced calorie confection without bitterness or musty off-taste.

Thus, while there have been described what are presently believed to be the preferred embodiments of the invention, those skilled in the art will realize that changes and modifications made be made thereto without departing from the spirit of the invention, and it is intended to claim all such changes and modifications as fall within the true scope of the invention.

The invention as discribed above can be summarized as referring to:

1. A method of removing unpleasant organoleptic sensations from polydextrose-containing confections, comprising:

a) adjusting the pH of an aqueous solution of polydextrose used to prepare said confection to a range of between about 4 and about 7; and

(b) maintaining said pH during preparation of said confection whereby a pleasant polydextrose-containing confections with reduced bitterness and reduced off-taste is formed.

2. The method of 1 wherein said pH is from about 4.5 to about 6.5.

3. The method of 1 wherein said pH is from about 5 to about 6.

4. The method of 1 wherein said adjusting of said pH is by the addition of an alkali to said polydextrose.

5. The method of 4 wherein said alkali selected from the group consisting of sodium hydroxide, potassium hydroxide, calcium carbonate, calcium hydroxide, sodium carbonate, sodium bicarbonate, dibasic sodium phosphate, and mixtures thereof.

6. The method of 1 wherein said maintaining of said pH is accomplished by a buffer.

7. The method of 1 wherein said buffer is selected from the group consisting of phosphate, citrate, acetate, malate, adipates, succinates, and mixtures thereof.

8. An organoleptically-pleasing polydextrose product comprising a commercially available food-grade polydextrose in aqueous solution, said polydextrose having a pH of from about 4 to about 7 and buffering means.

9. The product of 8 wherein said pH is from about 4.5 to about 6.5.

10. The product of 8 wherein said pH is from about 5 to about 6.

11. The product of 8 further comprising an acidulant.

12. The product of 11 wherein said acidulant is selected from the group consisting of adipic, malic, citric, lactic, phosphoric and combinations thereof.

13. The product of 11 wherein said acidulant is present in an amount of from about 0.1% to about 5% by weight.

14. The product of 11 wherein said acidulant is present in an amount of from about 0.5% to 2%.

15. The product of 11 wherein said acidulant is present in an amount of from about 1% to about 1.5%.

16. A method of making confections with polydextrose having reduced bitterness and off-taste comprising:
   providing an aqueous solution of polydextrose having a pH range of between about 4 and about 7.

17. The method of 16 wherein said pH is in a range of between about 4.5 to about 6.5.

18. The method of 16 wherein said pH is in a range of from about 5 to about 6.

## Claims

1. A method of removing unpleasant organoleptic sensations from polydextrose-containing confections, comprising:
   a) adjusting the pH of an aqueous solution of polydextrose used to prepare said confection to a range of between about 4 and about 7; and
   (b) maintaining said pH during preparation of said confection whereby a pleasant polydextrose-containing confections with reduced bitterness and reduced off-taste is formed.

2. The method of Claim 1 wherein said pH is from about 4.5 to about 6.5, and preferably from about 5 to about 6.

3. The method of the Claims 1 or 2 wherein said adjusting of said pH is by the addition of an alkali to said polydextrose, preferably wherein said alkali selected from the group consisting of sodium hydroxide, potassium hydroxide, calcium carbonate, calcium hydroxide, sodium carbonate, sodium bicarbonate, dibasic sodium phosphate, and mixtures thereof.

4. The method according anyone of the Claims 1 to 3 wherein said maintaining of said pH is accomplished by a buffer.

5. The method of Claim 4 wherein said buffer is selected from the group consisting of phosphate, citrate, acetate, malate, adipates, succinates , and mixtures thereof.

6. An organoleptically-pleasing polydextrose product comprising a commercially available food-grade polydextrose in aqueous solution, said polydextrose having a pH of from about 4 to about 7 and buffering means, preferably wherein said pH is from about 4.5 to about 6.5, and preferably wherein said pH is from about 5 to about 6.

7. The product of Claim 6 further comprising an acidulant.

8. The product of Claim 7 wherein said acidulant is selected from the group consisting of adipic, malic, c lactic, phosphoric and combinations thereof, and wherein said acidulant preferably is present in an am of from about 0.1% to about 5% by weight, and preferably in an amount of from about 0.5% to 2%.

9. A method of making confections with polydextrose having reduced bitterness and off-taste comp'

providing an aqueous solution of polydextrose having a pH range of between about 4 and about 7.

10. The method of Claim 9 wherein said pH is in a range of between about 4.5 to about 6.5, and preferably wherein said pH is in a range of from about 5 to about 6.

# FIG. 1

EFFECT OF PH ON SENSORY PROPERTIES OF POLYDEXTROSE

EP 0 455 600 A1

# FIG. 2

EFFECT OF ANION ON TASTE QUALITY OF POLYDEXTROSE

EP 0 455 600 A1

European Patent
Office

**EUROPEAN SEARCH REPORT**

Application Number

EP    91 81 0318
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-1182961 (PFIZER & CO)<br>* page 4, lines 102 - 120 *<br>* page 5, lines 104 - 126 *<br>* page 8, lines 17 - 50 * | 1-3, 6,<br>9-10 | A23L1/236<br>A23L1/308<br>A23G3/00<br>A23G3/30 |
| A | | 4-5 | |
| Y | | 7-8 | |
| D | & US-A-3766165<br>--- | | |
| Y | US-A-4528206 (HOWARD KASTIN)<br>* column 3, line 56 - column 4, line 62 *<br>--- | 7-8 | |
| X | US-A-4814195 (WALLACE H. YOKOYAMA ET AL.)<br>* column 3, lines 11 - 22 *<br>* column 5, line 41 - column 7, line 20 *<br>--- | 1-3, 6,<br>9-10 | |
| X | DATABASE FSTA  AN=87:8264  DN=87-06-L0042<br>INT. FOOD INFORMATION SERVICE, READING, GB.<br>C.D.BARNETT:"TRY NEW POLYDEXTROSE IN LOW-CALORIE CANDIES"<br>& CANDY INDUSTRY, vol 151 no.2 pp.36-38 (1986)<br>* whole abstract *<br>--- | 1-3, 6,<br>9-10 | |
| A | DATABASE FSTA  AN=82:16499  DN=82-11-T0640<br>INT. FOOD INFORMATION SERVICE, READING, GB.<br>"NEWLY APPROVED BULKING AGENT REPLACES HIGHER CALORIE INGREDIENTS"<br>& FOOD DEVELOPMENT vol 15 no.7 pp.38-39 (1981)<br>* whole abstract *<br>--- | 1-3, 6,<br>9-10 | TECHNICAL FIELDS SEARCHED (Int. Cl.5 )<br><br>A23L<br>A23G |
| A | DATABASE FSTA  AN=82:6765  DN=82-05-L0352<br>INT. FOOD INFORMATION SERVICE, READING, GB.<br>A.TORRES ET AL.:"POLYDEXTROSE AND ITS APPLICA-TIONS IN FOODS"<br>& FOOD TECHNOLOGY vol 35 no.7 pp.44-49 (1981)<br>* whole abstract *<br>--- | 1-3, 6,<br>9-10 | |

-/--

The present search report has been drawn up for all claims

| Place of search | Date of completion of the search | Examiner |
|---|---|---|
| BERLIN | 02 AUGUST 1991 | ALVAREZ ALVAREZ C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  & : member of the same patent family, corresponding document

EPO FORM 1503 03.82 (P0401)

EP 0 455 600 A1

**European Patent Office**

## EUROPEAN SEARCH REPORT

Application Number

EP    91 81 0318
Page 2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | PATENT ABSTRACTS OF JAPAN vol. 14, no. 466 (C-768)(4409) 11 October 1990, & JP-A-2 190166 (TAKEDA SHOKUHIN KOGYO K.K.) 26 July 1990, * the whole document * | 1-3, 6, 9-10 | |
| P,X | EP-A-380248 (PFIZER INC.) * page 1, lines 6 - 24 * * page 5, line 19 - page 6, line 40 * | 1-3, 6-10 | |

TECHNICAL FIELDS SEARCHED (Int. Cl.5 )

The present search report has been drawn up for all claims

| Place of search | Date of completion of the search | Examiner |
|---|---|---|
| BERLIN | 02 AUGUST 1991 | ALVAREZ ALVAREZ C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)